# EUROPÄISCHE PATENTSCHRIFT

(11) **EP 2 161 920 B1**
(45) Veröffentlichungstag und Bekanntmachung des Hinweises auf die Patenterteilung: **16.02.2011**
(21) Anmeldenummer: 09180794.1
(22) Anmeldetag: 12.09.2002
(51) Int. Cl.: H04N 5/222

(54) **Körpermontierbares Kameratragesystem mit einem multifunktionalen Verbund elektrischer Komponenten**
Camera support device worn on the body comprising a multifunctional assembly of electrical components
Système de portage de caméra pouvant être monté sur le corps, doté d'un assemblage multifonctionnel de composants électriques

(30) Priorität: 13.09.2001 DE 10145193
(43) Veröffentlichungstag der Anmeldung: 10.03.2010
(62) Teilanmeldung aus: 02772294.1
(73) Patentinhaber: Camera Dynamics GmbH, 85386 Eching (DE)
(72) Erfinder: Schaller, Curt O., 81541, München (DE)
(74) Vertreter: HOFFMANN EITLE

(56) Entgegenhaltungen:
- WO-A-88/06695
- PATENT ABSTRACTS OF JAPAN Bd. 017, Nr. 646 (E-1467), 30. November 1993 (1993-11-30) -& JP 05 207338 A (MATSUSHITA ELECTRIC IND CO LTD), 13. August 1993 (1993-08-13)
- PATENT ABSTRACTS OF JAPAN Bd. 017, Nr. 50 (E-1314), 29. Januar 1993 (1993-01-29) -& JP 04 264887 A (SONY CORP), 21. September 1992 (1992-09-21)

## Beschreibung

Die Erfindung betrifft ein körpermontierbares Kameratragesystem mit einem multifunktionalen Verbund elektrischer Komponenten.

Körpermontierbare Kameratragesysteme sind bekannt und beispielsweise in EP 0 316 370 A1 beschrieben. Mit diesen Kameratragesystemen können Kameras, Peripheriegeräte und die für die Stromversorgung erforderlichen Batterien oder Akkus von einem Kameramann getragen und unabhängig von den Bewegungen des Kameramanns stabil gehalten werden. Für die Verbindung der Kamera, der Peripheriegeräte und der Stromversorgung untereinander sind in der Regel mehrere Anschlüsse und eine Verkabelung vorhanden, damit die entsprechenden Verbindungen hergestellt werden können, ohne dass der Kameramann bei seiner Arbeit behindert wird.

Bei den bekannten Kameratragesystemen wird regelmäßig nur ein analoges Videosignal und die Stromversorgung über die in bzw. an dem Kameratragesystem vorgesehene Verkabelung geführt. Auch die Anzahl der anschließbaren Peripheriegeräte ist beschränkt im Hinblick auf den mit der Verkabelung verbundenen Aufwand.

Dementsprechend gering ist die Flexibilität, die mit den bekannten Systemen erreicht wird.

Es wird ein körpermontierbares Kameratragesystem angegeben, bei dem zumindest zwei Anschlusseinrichtungen mit zumindest einer zusätzlichen Signalleitung verbunden sind, so dass an der einen der zwei Anschlusseinrichtungen eine Sensoreinrichtung und an der anderen der zwei Anschlusseinrichtungen eine Signalgebereinrichtung, über die zusätzliche Signalleitung kabelgebunden anschließbar sind. Dabei erfolgt die Verbindung mit Hilfe der zusätzlichen Signalleitung derart, dass sie über die Anschlusseinrichtungen genutzt werden kann, jedoch ohne dass die Funktion bzw. die Nutzung der für andere Zwecke vorgesehenen Anschlusseinrichtungen gestört wird.

Mit dieser Gestaltung wird erreicht, dass für den Fall, dass Anschlusseinrichtungen nicht benutzt werden, eine weitere Verwendung der Anschlusseinrichtung zusätzlich zu deren Hauptfunktion ermöglicht wird. Beispielsweise können das Signal eines Tally-Sensors, dessen Ausgangssignal das Aufleuchten der Tally-Lampe einer Kamera anzeigt, und das Ansteuersignal für einen Tally-Signalgeber, etwa eine Tally-Leuchtdiode, auf diese Weise über bereits vorhandene Anschlussbuchsen, die um einen zusätzlichen Anschluss für die zusätzliche Signalleitung ergänzt sind, geführt werden, natürlich in der Regel nur sofern die Anschlussbuchsen nicht entsprechend ihrer Hauptfunktion benutzt werden.

Die Erfindung ist beispielsweise verwendbar bei einem körpermontierbaren Kameratragesystem mit einem multifunktionalen Verbund elektrischer Komponenten, nämlich: mit zumindest einer ersten Anschlusseinrichtung für die kabelgebundene Zuführung eines Videosignals von einer Kamera, zumindest einer zweiten Anschlusseinrichtung für die kabelgebundene Zuführung eines Videosignals zu einem Peripheriegerät, beispielsweise einem Monitor, einem Videoaufzeichnungsgerät und/oder einer Sendeeinrichtung für Videosignale, mehreren Signalleitungen für die Übertragung der Videosignale zwischen den Anschlusseinrichtungen, und zumindest einer Betriebsmodusumschalteinrichtung für die Umschaltung des Betriebsmodus der Anschlusseinrichtungen und der Signalleitungen, wobei in einem ersten Betriebsmodus die mehreren Signalleitungen für die Übertragung eines Videosignals eines ersten Typs, beispielsweise eines hochauflösenden Videosignals (HDTV), verwendbar sind und wobei in einem zweiten Betriebsmodus ein Teil der mehreren Signalleitungen für die Übertragung eines Videosignals eines zweiten Typs, beispielsweise eines niedrig auflösenden (analogen) oder digitalen (SDI) Videosignals, verwendbar ist und der verbleibende Teil der mehreren Signalleitungen für andere Zwecke verwendbar ist.

Durch diese Gestaltung des Verbunds der elektrischen Komponenten werden die für hochauflösende Videosignale erforderlichen Signalleitungen auf sinnvolle Weise auch dann genutzt, wenn das erfindungsgemäße Kameratragesystem mit einer analogen oder einer digitalen Kamera verwendet wird. Das heißt, dass mit ein und derselben Verkabelung sowie den vorhandenen Anschlussbuchsen sowohl hochauflösende Kameras als auch analoge und digitale Kameras an dem erfindungsgemäßen Kameratragesystem eingesetzt werden können. Die Anschlüsse sind entsprechend ausgelegt, und die erforderlichen Signalleitungen sind vorhanden. Werden einige Signalleitungen nicht für die Übertragung von Videosignalen benötigt, stehen (diese Leitungen für andere Verwendungen zur Verfügung und werden entsprechend auf andere Weise genutzt. Damit wird erreicht, dass das Kameratragesystem gegenüber den bekannten Systemen flexibler ist, ohne dass ein erhöhter und in einigen Anwendungsfällen ungenutzter Aufwand getrieben wird.

Im folgenden wird die Erfindung anhand eines Ausführungsbeispiels und unter Bezugnahme auf die Figuren genauer erläutert. Dabei zeigt:
- Fig. 1: eine grundlegende Darstellung des Aufbaus eines körpermontierbaren Kameratragesystems; und
- Fig. 2: den erfindungsgemäßen Verbund der elektrischen Komponenten des Kameratragesystems.

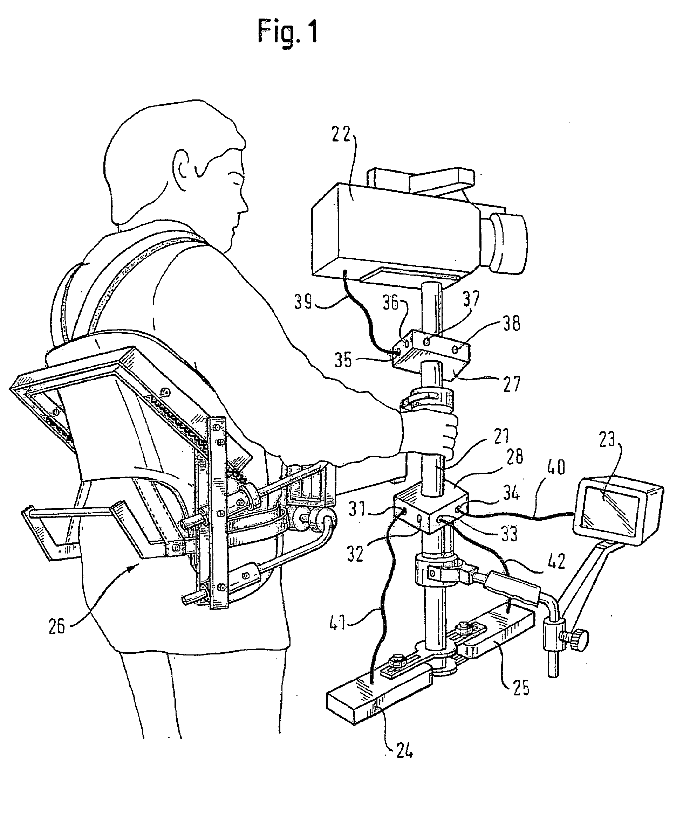

In Fig. 1 ist der Aufbau eines körpermontierbaren Kameratragesystems gezeigt, bei dem erfindungsgemäß ein multifunktionaler Verbund elektrischer Komponenten vorgesehen werden kann. An einer Halterung 21 werden beispielhaft eine Kamera 22, ein Monitor 23 und Batterien 24 und 25 befestigt. Das Halterohr ist mit einem Tragegerüst 26 verbunden, mit dessen Hilfe der Kameramann das körpermontierbare Kameratragesystem trägt. An dem Halterohr 21 sind ferner Anschlussgehäuse 27 und 28 vorgesehen, an denen Anschlussbuchsen 31 bis 38 angeordnet sind. Diese Anschlussbuchsen bieten die Möglichkeit, elektrische (Video)-Anschlusskabel 39 und 40 bzw. elektrische Stromversorgungskabel 41 und 42 von der Kamera, dem Monitor und den Batterien anzuschließen. An die Anschlussbuchsen können auch weitere Peripheriegeräte, beispielsweise Videoaufzeichnungsgeräte oder Sendeeinrichtungen für Videosignale mit entsprechenden Anschlusskabeln angeschlossen werden. Zwischen den Buchsen 31 bis 38 verlaufen Signal- und Stromversorgungsleitungen zumeist im Inneren des Rohres 21. Ferner können in dem Halterohr 21 und/oder den Anschlussgehäusen 27 und 28 elektrische Komponenten untergebracht werden. Insgesamt bilden diese einen Verbund aus elektrischen Komponenten der im folgenden noch genauer beschrieben wird.

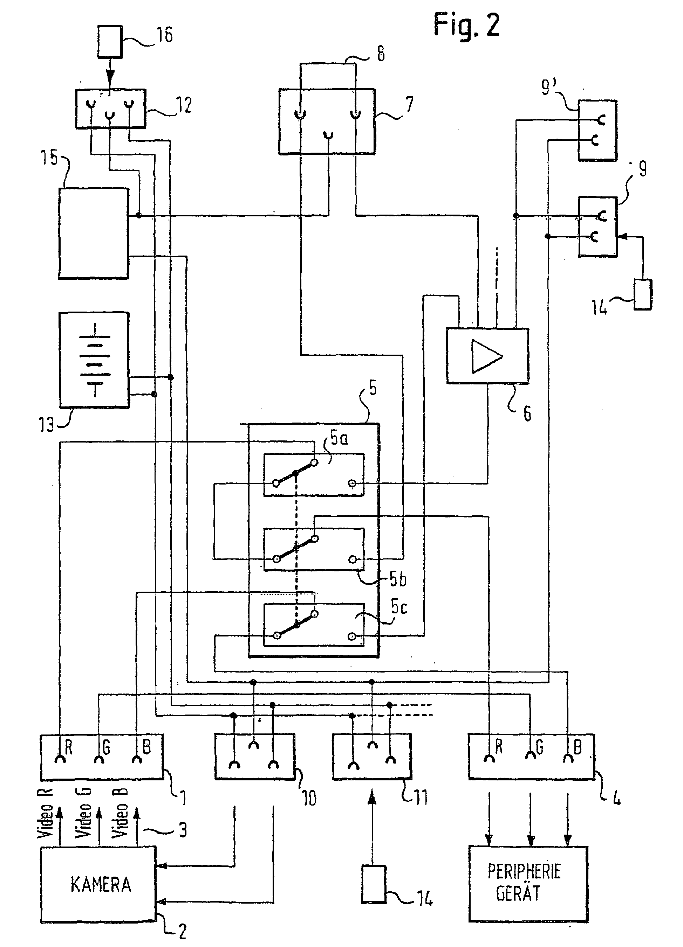

In Fig. 2 ist der erfindungsgemäße Verbund aus elektrischen Komponenten des körpermontierbaren Kameratragesystems dargestellt.

Erfindungsgemäß ist eine erste Anschlusseinrichtung 1 für die kabelgebundene Zuführung eines Videosignals von einer Kamera 2 vorgesehen. Das Videosignal, das von der Kamera 2 über ein entsprechendes Anschlusskabel 3 an die erste Anschlusseinrichtung 1 zugeführt wird, kann ein hochauflösendes oder niedrig auflösendes (analoges) Videosignal sein. Für den Fall eines hochauflösenden Videosignals (HDTV) werden herkömmlicher weise drei Signalleitungen benötigt. Demgegenüber wird für den Fall eines niedrig auflösenden (analogen) Videosignals herkömmlicher weise nur eine Signalleitung verwendet. Darüber hinaus können andere Videosignale, beispielsweise digitale Videosignale (SDI) über eine oder mehrere Videosignalleitungen geführt werden, die der ersten Anschlusseinrichtung 1 von der Kamera 2 über das Anschlusskabel 3 zugeführt werden.

In Fig. 2 ist ferner eine zweite Anschlusseinrichtung 4 für die kabelgebundene Zuführung eines Videosignals zu einem Peripheriegerät gezeigt. Auch bei dem Peripheriegerät kann das zugeführte Videosignal ein hochauflösendes, ein niedrig auflösendes (analoges) oder ein digitales Videosignal sein, so dass eine entsprechende Anzahl von Signalleitungen benötigt wird. Peripheriegeräte sind beispielsweise Monitore, Videoaufzeichnungsgeräte oder Videosignal-Sendeeinrichtungen.

Wie aus Fig. 2 erkennbar, sind mehrere Signalleitungen R, G, B für die Übertragung der Videosignale zwischen den Anschlusseinrichtungen 1 und 4 vorgesehen. Teilweise werden die Videosignale über eine ununterbrochene Signalleitung von der ersten Anschlusseinrichtung 1 zu der zweiten Anschlusseinrichtung 4 übertragen, wie beispielsweise für die Signalleitung G gezeigt ist; zum Teil findet die Übertragung der Videosignale aber auch über mehrere Abschnitte der Signalleitungen statt, wie für die Signalleitungen R und B gezeigt ist.

Ferner ist eine Betriebsmodusumschalteinrichtung 5 vorgesehen, die den Verbund elektrischer Komponenten des Kameratragesystems zwischen zwei Betriebsmodi umschaltet. In einem ersten Betriebsmodus, für den die Schaltstellung der Umschalteinrichtung 5 gezeigt ist, werden die mehreren Signalleitungen R, G und B für die Übertragung eines hochauflösenden Videosignals (HDTV) verwendet. Das bedeutet, dass das Videosignal VideoR der Kamera 2 über die Signalleitung R und damit über eine erste Umschalteinheit 5a und eine zweite Umschalteinheit 5b an die zweite Anschlusseinheit 4 übertragen wird. Das Videosignal VideoB der Kamera 2 wird über die Signalleitung B und damit über die Umschalteinheit 5c an die zweite Anschlusseinheit 4 übertragen. Wie bereits erwähnt, stellt die Signalleitung G eine unmittelbare Verbindung zwischen der ersten Anschlusseinrichtung 1 und der zweiten Anschlusseinrichtung 4 her, so dass eine Übertragung des Videosignals G der Kamera 2 gewährleistet ist. Damit werden in dem ersten Betriebsmodus alle Videosignale VideoR, VideoG und VideoB einer hochauflösenden Videokamera 2 von der ersten Anschlusseinrichtung 1 an die zweite Anschlusseinrichtung 4 übertragen.

Wenn die Betriebsmodusumschalteinrichtung 5 von der in Fig. 2 gezeigten ersten Schaltstellung in die in Fig. 2 nicht dargestellte, aber der Fig. 2 ebenfalls entnehmbare zweite Schaltstellung umgeschaltet wird, ist der Verbund elektrischer Komponenten des erfindungsgemäßen Kameratragesystems für niedrig auflösende (analoge) Videosignale, digitale oder andere Videosignale und andere Signale verwendbar. Das niedrig auflösende (analoge) Videosignal der Kamera 2 wird der Signalleitung R über die erste Anschlusseinrichtung 1 zugeführt und gelangt über die erste Umschalteinheit 5a und weitere Komponenten, die im folgenden noch genauer beschrieben werden, zur zweiten Anschlusseinrichtung 4. Zuvor wird das Videosignal aber von der ersten Umschalteinheit 5a einem Video-Verstärker/Multiplexer 6 zugeführt, der das zugeführte Videosignal verstärkt und auf mehrere Ausgänge verteilt. Das Videosignal eines ersten Ausgangs des Video-Verstärker/Multiplexers 6 wird einer dritten Anschlusseinrichtung 7 für die Zuführung von Videosignalen zu Peripheriegeräten zugeführt. Ein Videosignal des Peripheriegeräts kann von der dritten Anschlusseinrichtung 7 über die zweite Umschalteinheit 5b an die zweite Anschlusseinrichtung 4 geführt werden. Über eine Brücke 8 wird für den Fall, dass kein Peripheriegerät an die dritte Anschlusseinrichtung 7 angeschlossen ist, das Videosignal des ersten Ausgangs des Video-verstärker/Multiplexers 6 über die zweite Umschalteinheit 5b an die zweite Anschlusseinrichtung 4 übertragen. Anstelle der Brücke 8 kann aber ein beliebiges Peripheriegerät zur Bearbeitung/Veränderung des Videosignals, das vom ersten Ausgang des Video-Verstärker/Multiplexers 6 der dritten Anschlusseinrichtung 7 zugeführt wird, angeschlossen werden, so dass dann von der dritten Anschlusseinrichtung 7 ein von dem Peripheriegerät verändertes/bearbeitetes videosignal über die zweite Umschalteinheit 5b an die zweite Anschlusseinrichtung 4 zugeführt wird.

Das Videosignal eines zweiten Ausgangs des Video-Verstärker/Multiplexers 6 wird einer vierten Anschlusseinrichtung 9 für die kabelgebundene Zuführung eines Videosignals zu einem Peripheriegerät zugeführt. Auf diese Weise kann ein weiteres Peripheriegerät neben den an der zweiten und der dritten Anschlusseinheit angeschlossenen Peripheriegeräten an den Verbund elektrischer Komponenten des Kameratragesystems angeschlossen werden. In Abhängigkeit von der Anzahl der Ausgänge des Video-Verstärker/Multiplexers 6 können zusätzliche Anschlusseinrichtungen für Peripheriegeräte vorgesehen sein.

Die Signalleitung B wird im zweiten Betriebsmodus genutzt, um ein Videosignal von einem dritten Ausgang des Video-Verstärker/Multiplexers 6 über die dritte Umschalteinheit 5c an die erste Anschlusseinrichtung 1 zu übertragen.

Um die Kamera und/oder Peripheriegeräte mit Energie zu versorgen, umfasst der Verbund elektrischer Komponenten vorzugsweise weitere Anschlusseinrichtungen 10, 11 und 12, die mit einer elektrischen Energieversorgungseinheit 13, die eine oder mehrere wiederaufladbare Batterien umfasst, verbunden sind und die für die Kamera und die Peripheriegeräte Anschlüsse an eine Spannungsversorgung bereitstellen. Die weiteren Anschlusseinrichtungen können, wie in Fig. 2 gezeigt, die gleiche Betriebsspannung zur Verfügung stellen oder unterschiedliche Betriebsspannungen für die Zuführung zur Kamera bzw. zu Peripheriegeräten ermöglichen.

Erfindungsgemäß ist an zumindest einer der Anschlusseinrichtungen eine zusätzliche Signalleitung vorgesehen, die über die Standardbelegung der Anschlusseinrichtung hinaus und ohne diese zu behindern die Möglichkeit bietet, eine Sensoreinrichtung 14 anzuschließen. In Fig. 2 ist die Sensoreinrichtung 14 sowohl bei der vierten Anschlusseinrichtung 9 als auch bei der weiteren Anschlusseinrichtung 11 beispielhaft dargestellt. Das Signal der Sensoreinrichtung 14 wird bei dem in Fig. 2 gezeigten Ausführungsbeispiel über eine Signalleitung an eine Auswerteeinheit 15 übermittelt, die über eine weitere Signalleitung mit den Anschlusseinrichtungen 7 und 12 verbunden ist. Auch hier erfolgt die Bereitstellung des Signals von der Auswerteeinheit 15 zusätzlich zur Standardbelegung der Anschlusseinrichtungen 7 und 12. An eine der Anschlusseinrichtungen kann eine Signalgebereinrichtung 16 angeschlossen werden, die in Fig. 2 beispielhaft bei Anschlusseinrichtung 12 gezeigt ist.

Auf diese Weise wird ermöglicht, dass bei dem erfindungsgemäßen Verbund elektrischer Komponenten eines Kameratragesystems mit Hilfe eines Sensors 14 der Zustand einer Tally-Signalleuchte der Kamera erfasst und über die zusätzliche Signalleitung an einem Signalgeber 16 übertragen wird. Der sonst für den Kameramann oft nicht sichtbare Leuchtzustand der Tally-Signalanzeige wird so auf einen weiteren Signalgeber übertragen und kann an einer für den Kameramann besser sichtbaren Stelle des Kameratragesystems bereitgestellt werden.

Sofern die Sensoreinrichtung entsprechend ausgestaltet ist, kann auf die Auswerteeinheit 15 verzichtet werden, so dass eine einzige zusätzliche Signalleitung zwischen den Anschlusseinrichtungen vorgesehen werden muss, um den Anschluss des Sensors und des Signalgebers zu ermöglichen.

Vorzugsweise sind zumindest einzelne Anschlusseinrichtungen in doppelter Ausführung vorgesehen, so dass zwei Anschlussbuchsen für eine Anschlussfunktion vorhanden sind. In Fig. 2 ist diese Gestaltung beispielhaft für die vierte Anschlusseinrichtung 9 gezeigt, die zusätzlich als fünfte Anschlusseinrichtung 9' vorgesehen ist. Durch entsprechende räumliche Anordnung der doppelt ausgeführten Anschlussbuchsen, beispielsweise in den in Fig. 1 gezeigten Anschlussboxen 27 und 28, kann mit kurzen Anschlusskabeln eine Verbindung entsprechend der Hauptfunktion an einer der Anschlussbuchsen hergestellt, also ein Peripheriegerät angeschlossen werden, und eine Zusatzfunktion über die andere Anschlussbuchse genutzt werden.

Ein weiterer Aspekt bezieht sich auf ein körpermontierbares Kameratragesystem mit einem multifunktionalen Verbund elektrischer Komponenten, nämlich mit zumindest einer ersten Anschlusseinrichtung für die kabelgebundene Zuführung eines Videosignals von einer Kamera; zumindest einer zweiten Anschlusseinrichtung für die kabelgebundene Zuführung eines Videosignals zu einem Peripheriegerät, beispielsweise einem Monitor, einem Videoaufzeichnungsgerät und/oder einer Sendeeinrichtung für Videosignale; mehreren Signalleitungen für die Übertragung der Videosignale zwischen den Anschlusseinrichtungen; und zumindest einer Betriebsmodusumschalteinrichtung für die Umschaltung des Betriebsmodus der Anschlusseinrichtungen und der Signalleitungen, wobei in einem ersten Betriebsmodus die mehreren Signalleitungen für die Übertragung eines Videosignals eines ersten Typs verwendbar sind und wobei in einem zweiten Betriebsmodus ein Teil der mehreren Signalleitungen für die Übertragung eines Videosignals eines zweiten Typs verwendbar ist und der verbleibende Teil der mehreren Signalleitungen für andere Zwecke verwendbar ist.

Vorzugsweise ist das Kameratragesystem dadurch gekennzeichnet, dass in dem ersten Betriebsmodus die mehreren Signalleitungen eine direkte Verbindung zwischen der ersten und der zweiten Anschlusseinrichtung herstellen.

Vorzugsweise ist eine dritte Anschlusseinrichtung für die kabelgebundene Zuführung eines Videosignals zu einem Peripheriegerät vorgesehen, der in dem zweiten Betriebsmodus das Videosignal einer Signalleitung der mehreren Signalleitungen zugeführt wird und von der ein Videosignal des Peripheriegeräts der zweiten Anschlusseinrichtung zugeführt wird.

Das Kameratragesystem gemäß diesem Aspekt kann dadurch gekennzeichnet sein, dass in dem zweiten Betriebsmodus das Videosignal von einer Signalleitung der mehreren Signalleitungen einem Eingang einer video-Verstärker/Multiplexer-Einrichtung zugeführt wird, das Videosignal eines ersten Ausgangs der Video-Verstärker/Multiplexer-Einrichtung der zweiten Anschlusseinrichtung zugeführt wird und das Videosignal eines zweiten Ausgangs der Video-Verstärker/Multiplexer-Einrichtung einer vierten Anschlusseinrichtung für die kabelgebunden Zuführung eines Videosignals zu einem Peripheriegerät zugeführt wird.

Vorzugsweise wird das Videosignal des ersten Ausgangs der Video-Verstärker/Multiplexer-Einrichtung der dritten Anschlusseinrichtung zugeführt, und wird das Videosignal von der dritten Anschlusseinrichtung der zweiten Anschlusseinrichtung zugeführt.

Das Kameratragesystem kann dadurch gekennzeichnet sein, dass in dem zweiten Betriebsmodus das Videosignal eines dritten Ausgangs der Video-Verstärker/Multiplexer-Einrichtung der ersten Anschlusseinrichtung über eine Signalleitung des verbleibenden Teils der mehreren Signalleitungen zugeführt wird.

In einem Aspekt verläuft zumindest eine Signalleitung der mehreren Signalleitungen ohne Unterbrechung zwischen der ersten und der zweiten Anschlusseinrichtung.

Das Kameratragesystem kann weiter dadurch gekennzeichnet sein, dass weitere Anschlusseinrichtungen für die Zuführung/Verteilung elektrischer Energie zu der Kamera und/oder zu Peripheriegeräten vorgesehen sind.

Zumindest eine der Anschlusseinrichtungen kann in doppelter Ausführung vorgesehen sein.

Das Kameratragesystem ist erfindungsgemäß dadurch gekennzeichnet sein, dass zumindest zwei der Anschlusseinrichtungen mit zumindest einer zusätzlichen Signalleitung verbunden sind, so dass an der einen der zwei Anschlusseinrichtungen eine Sensoreinrichtung und an der anderen der zwei Anschlusseinrichtungen eine Signalgebereinrichtung kabelgebunden anschließbar sind.

## Patentansprüche

1. Körpermontierbares Kameratragesystem mit zumindest zwei Anschlusseinrichtungen (1, 4, 7, 9, 9', 10, 11, 12) für den Anschluss einer Kamera oder eines Peripheriegeräts, beispielsweise eines Monitors, eines Videoaufzeichnungsgeräts und/oder einer Sendeeinrichtung für Videosignale, oder für die Zuführung/Verteilung elektrischer Energie zu der Kamera und/oder zu Peripheriegeräten, **gekennzeichnet durch** eine zusätzliche Signalleitung, so dass an der einen der zwei Anschlusseinrichtungen eine Sensoreiririchtung (14) und an der anderen der beiden Anschlusseinrichtungen eine Signalgebereinrichtung (16), über die zusätzliche Signalleitung kabelgebunden anschließbar sind.

2. Kameratragesystem nach Anspruch 1, **dadurch gekennzeichnet, dass** in der zusätzlichen Signalleitung eine Auswerteeinheit (15) für die Auswertung des Signals von der Sensoreinrichtung (14) und für die Zuführung eines Ansteuersignals an die Signalgebereinrichtung (16) vorgesehen ist.

## Claims

1. Body-mountable camera-carrying system having at least two connection devices (1, 4, 7, 9, 9', 10, 11, 12) for the connection of a camera or a peripheral device, for example a monitor, a video recording device and/or a transmitting device for video signals, or for the supply/distribution of electrical energy to the camera and/or to peripheral devices, **characterised by** an additional signal line, so that at one of the two connection devices a sensor device (14) and at the other of the two connection devices a signal transmitter device (16) can be connected by cable via the additional signal line.

2. Camera-carrying system according to claim 1, **characterised in that** in the additional signal line is provided an evaluating unit (15) for evaluation of the signal from the sensor device (14) and for the delivery of a control signal to the signal transmitter device (16).

## Revendications

1. Système de portage de caméra pouvant être monté sur le corps, avec au moins deux dispositifs de raccordement (1, 4, 7, 9, 9', 10, 11, 12) pour le raccordement d'une caméra ou d'un appareil périphérique, par exemple d'un moniteur, d'un appareil d'enregistrement vidéo et/ou d'un dispositif émetteur pour des signaux vidéo, ou pour l'amenée/distribution d'énergie électrique à la caméra et/ou aux appareils périphériques, **caractérisé par** une ligne de signalisation supplémentaire, de manière que, par une liaison par câble, par l'intermédiaire de la ligne de signalisation supplémentaire, un dispositif à capteur (14) puisse être raccordé à un premier des deux dispositifs de raccordement, et qu'un dispositif générateur de signal (16) puisse être raccordé, à l'autre des deux dispositifs de raccordement.

2. Système de portage de caméra selon la revendication 1, **caractérisé en ce qu'**une unité d'évaluation (15), pour l'évaluation du signal provenant du dispositif à capteur (14) et pour l'amenée d'un signal de commande au dispositif générateur de signal (16), est prévue dans la ligne de signalisation supplémentaire.
